# EUROPEAN PATENT APPLICATION

(11) **EP 4 700 991 A1**
(43) Date of publication of application: **25.02.2026**
(21) Application number: 24195838.8
(22) Date of filing: 22.08.2024
(51) Int. Cl.: H01R 4/30, H01M 50/553, H01R 4/50, H01R 11/28

(54) **LOCKING SYSTEM FOR POLE TERMINALS OF A BATTERY, A CONNECTION ASSEMBLY AND A STARTER BATTERY COMPRISING SAID LOCKING SYSTEM**

(71) Applicant: Daikin Europe N.V., 8400 Oostende (BE)
(72) Inventor: Sarno, Alessandro, I-46029 Suzzara (MN) (IT); Frigeri, Graziano, I-46020 Quingentole (MN) (IT)
(74) Representative: Porta & Consulenti Associati S.p.A.

(57) **Abstract**

A locking system (40) for a screw-on clamp configured to be fitted on a stud (14, 14b) of an external pole terminal of a battery (10), the locking system (40) comprising: a housing (41) configured to house a screw-on clamp (20) comprising a hollow main body (42) comprising a body side wall (44) defining a through opening (46) and extending in an axial direction, a first recessed element (47) and a second recessed element (48) fixedly associated with the body side wall (44), wherein the first recessed element (47) comprising a first recess (56) having a first opening facing upwards with respect to the axial direction and a first retaining element (53) located in the first recess (56), and the second recessed element (48) comprising a second recess (57) having a second opening facing upwards with respect to the axial direction and a second retaining element (54) located in the second recess (54), the locking system further comprising a clip (60) configured to be coupled to the housing (41) and comprising a first leg (62) and a second leg (63), the first and second legs (61, 62) being configured to be inserted in the respective first and second recess (56, 57) and to be releasably fastened to the first and second retaining elements (53, 54). A connection assembly (80) comprising the locking system (40) and a starter battery (10) comprising said assembly are also described.

## Description

The present invention relates to a locking system for a screw-on clamp for connection to an external pole terminal of a battery, in particular of a starter battery used to power an electrical starter motor of an internal combustion engine of a vehicle or of a machine. The present invention concerns also a connection assembly comprising said locking system and a starter battery comprising said assembly.

Typically, a starter battery, for example a 12V lead-acid or lithium-ion battery, has an external case enclosing the battery pack assemblies and is equipped with a pair of external terminals of positive and negative pole for the electrical connections to the starter motor and possibly to electrical equipment.

The pole terminals of a starter battery are often in the form of upstanding studs or posts which are connected to and often in direct contact with an electrically conductive connector to ease the connection of the poles to one or more electrical cables, for example electrical cables connecting each pole to the starter motor of a vehicle. The electrically conductive connector is configured to fit on a battery pole terminal for electrical contact with the same. The electrically conductive connector is often a part of an assembly which further comprises additional parts configured to lock the connector to the poles. In the following, the assembly will be referred to as screw-on clamp. In particular, the screw-on clamp is a so-called French-type clamp or French-type battery terminal.

Transport vehicles such as trucks, vans and (semi-)trailers are typically used for carrying cargo. In some instances, the cargo needs to be maintained at a controlled temperature, in particular in case of perishable items in order to avoid deterioration during transportation. In this case, the vehicle comprises a transport conditioning unit including a compressor, an evaporator, and a condenser to cool an enclosed space. For example, the enclosed space may be the interior of a trailer. The transport conditioning unit is typically powered by an electrical generator driven by an internal combustion engine, such as a diesel engine. The internal combustion engine can be either a dedicated engine for the powering of the transport conditioning unit, or the vehicle's engine used for traction.

Transport vehicles often travel for a long distance and on rough and bumpy roads, thereby causing vibrations that are transferred to internal components of the vehicle. The Applicant has noted that prolonged and/or significant vibrations may cause the electrically conducting connector being loose or totally disconnected from the pole terminal. This frequently leads to a failure to start the motor or to a battery working at a lower voltage with consequent power loss during driving.

More generally, the Applicant has observed that the electrically conductive connector of the screw-on clamp tends to loosen from the pole terminal under vibrations. In some instances, the screw-on clamp tends to rotate in an unscrew direction.

The Applicant has recognised that the provision of a locking system that hinders the disengagement of the clamp from the pole terminal would secure the connection between the pole terminal and the clamp.

In a first aspect, the present disclosure relates to a locking system for a screw-on clamp configured to be fitted on a stud of an external pole terminal of a battery, the locking system comprising:
a housing configured to house a screw-on clamp, the housing comprising
   - a hollow main body comprising a body side wall defining a through opening and extending in an axial direction,
   - a first recessed element and a second recessed element fixedly associated with the body side wall,
      the first recessed element comprising a first recess having a first opening facing upwards with respect to the axial direction and a first retaining element located in the first recess,
      the second recessed element comprising a second recess having a second opening facing upwards with respect to the axial direction and a second retaining element located in the second recess,
the locking system further comprising a clip configured to be coupled to the housing and comprising a first leg and a second leg, the first and second legs being configured to be inserted in the respective first and second recess and to be releasably fastened to the first and second retaining elements.

In the present description and in the subsequent claims, the expression 'fixedly associated with' is used to indicate a stable coupling without relative motion between two distinct elements.

The fastening of the clip to the housing, by means of retaining elements located in respective recesses may exert a force that hinders movements and in particular the rotation of the screw-on clamp about the pole terminal. Preferably, the first recessed element and the second recessed element are angularly spaced from one another with respect to the body side wall. Angular spacing between the first and second recessed elements may improve the fastening of the clip to the housing.

In a preferred embodiment, the first and second recessed elements are positioned in alignment with each other in a radial direction so as to be opposite to one another with respect to main body. In particular, the angular spacing between the first and second element is of 180°.

Preferably, the main body of the housing has a cylindrical shape.

In an embodiment, the housing comprises a base having a bottom opening part of the through opening of the main body. The side wall of the main body extends upwardly from the base.

Preferably, the clip has a general inverted U-shape when the locking system is in an operative position. The clip comprises a transverse bridge and the first leg and the second leg extend downwardly on either side of the transverse bridge.

Provision of a clip having an inverted U-shape may facilitate insertion of the legs in its respective recesses. Preferably, the legs of the clip are flexible to permit them to be inserted in the respective recess and to be brought into engagement with the respective retaining element.

Preferably, each of the first and second leg of the clip comprises a respective first and a second engagement pin protruding from said respective leg. Each engagement pin is configured to engage the respective first and second retaining element.

Preferably, each of the first and second retaining elements has a curved or slanted transition surface for engagement with the relevant engagement pin of the first and the second leg.

Connection of each engagement pin with a respective curved or slanted transition surface of the recess may improve the fastening mechanism between the housing and the clip.

Preferably, each engagement pin is shaped and dimensioned to fit into the curved or slanted transition surface.

In particular, the first and second engagement pins may protrude radially outwardly from the respective leg or they may protrude inwardly from the respective leg, depending, *inter alia,* on the position of the respective retaining elements within the recess of the relevant recessed element.

In embodiments, the first recessed element and the second recessed element extend radially outwardly from the body side wall. In an example, the first and second recessed element are positioned in alignment with each other with reference to the radial direction so as to be opposite to one another with respect to main body of the housing.

Fastening the clip at two opposite sides of the housing with respect to the hollow main body may provide a symmetrical arrangement of the engagement between the pins of the clip and the corresponding retaining elements.

In an embodiment, the first recessed element comprises first and second vertical walls extending radially outwardly from the body side wall of the main body and a first connecting wall transversally connecting the first and second vertical walls to one another, wherein the first retaining element is located on the first connecting wall and protrudes inwardly into the first recess. Preferably, the first engagement pin protrudes radially outwardly from the first leg for engagement with the first retaining element.

In an embodiment, the second recessed element comprises a third and a fourth vertical walls extending radially outwardly from the side wall of the main body and a second connecting wall transversally connecting the third and the fourth vertical walls to one another, wherein the second retaining element is located on the second connecting wall and protrudes inwardly into the second recess. Preferably, the second engagement pin protrudes radially outwardly from the second leg for engagement with the second retaining element.

Preferably, the transverse bridge of the clip comprises a tongue that protrudes from the same. In particular, the tongue protrudes downwardly from the transverse bridge.

Preferably, the tongue has a truncated-conical shape oriented downward.

Preferably, the transverse bridge comprises a tooth protruding downwardly from the same. In an embodiment, the tooth has a general conical shape. However, the tooth may have a different shape, for example a cylindrical or parallelepiped-type shape, as long as it protrudes downwardly from the transverse bridge.

The tooth and the tongue are transversely spaced from one another along the extension of the transverse bridge. In an embodiment, the tongue is arranged at a middle position of the transverse bridge and the tooth is positioned peripherally relative to the middle position.

Preferably, the locking system comprises a fastening member configured to connect the housing with the clip. The fastening member comprises a hollow member base having a through opening, a fastening strip and a lace connecting the member base to the fastening strip. In an operative condition, the main body of the housing is positioned on top of the hollow member base and in axial alignment with the same.

In embodiments comprising the fastening member, the clip further comprises a protruding element extending upward from the transverse bridge. The fastening strip is configured to be inserted through the protruding element so as to engage with the same.

Preferably, the protruding element is a flexible element. In an example, the protruding element comprises a pair of hooked-shaped projections extending upwards from the transverse bridge. In a non-limiting example, the hooks of the projections extend in radially opposite directions.

As it will be described in the following, engagement between the protruding element and the fastening strip aims at limiting or hindering relative movements of the clip with respect to the housing of the locking system. In an embodiment, the protruding element is located at the middle position of the transverse bridge, at the opposite side of the tongue.

According to another aspect of the present invention, a connection assembly comprising a locking system as disclosed herein is provided.

The connection assembly comprises a screw-on clamp comprising:
- a hollow clamp enclosure configured to surround a stud of an external pole terminal of a battery,
- an electrically conductive connection part configured to be fitted on the stud, the connection part comprising a lower portion configured to engage with the stud to form an electrical connection and an upstanding post projecting upwards from lower portion, and
- a tightening knob, the tightening knob having a central through hole engaging the upstanding post.

Preferably, in the connection assembly, the clamp enclosure of the screw-on clamp is housed in the main body of the housing of the locking system, the electrically conducting connection part is housed in the clamp enclosure and is configured to fit on the stud, and the tightening knob is engaged to the upstanding post of the electrically conductive connection part, and
the clip of the locking system is placed on top of the tightening knob with the legs of the clip being positioned radially outwardly of the tightening knob.

In some implementations, the central through hole of the tightening knob of the French-type clamp has an upwardly flared truncated conical shape. Preferably, the tongue of the clip has a downwardly flared truncated-conical shape. The central through hole of the tightening knob is configured to fit or house the tongue. When the tongue is inserted in the central through hole of the knob, the tightening knob and the tongue are axially aligned and engaged to one another so as to prevent or at least substantially limit the rotation of the tightening knob when the vehicle is moving.

In embodiments of the locking system where the clip is provided with a tooth, preferably the tooth of the clip is positioned peripherally relatively to the tongue and is configured to engage a peripheral portion of the tightening knob so as to prevent or at least substantially limiting the tightening knob from rotating.

According to a further aspect of the present invention, a starter battery is provided.

The starter battery comprises a case having a top surface. The case comprises a first recess and a second recess formed in the top surface. In particular, at the first recess, the top surface is connected with a first lower surface by a first and a second contiguous walls vertically arranged with respect to the top surface. Preferably, the first and second contiguous wall are perpendicular to one another.

At the second recess, the top surface is connected to a second lower surface by a third and a fourth contiguous walls vertically arranged with respect to the top surface. A first upstanding stud is positioned at the first recess and a second upstanding stud is positioned at the second recess. Preferably, the third and fourth contiguous walls are perpendicular to one another.

The battery case has a bottom surface opposite to the top surface. Preferably, the first and second lower surfaces are intermediate surfaces between the top and the bottom surface of the case.

Preferably, the starter battery comprises a first connection assembly comprising a first locking system of the type described above, wherein both first recessed element and the second recessed element of the housing of the first locking system extend radially outwardly from the main body side wall. The first connection assembly is fitted on the first stud with the housing of the locking system oriented in a diagonal direction with respect to first and second contiguous walls of the first recess.

Preferably, the starter battery further comprises a second locking system wherein the first recessed element and the second recessed element of the housing of the second locking system extend radially outwardly from the main body side wall. The second connection assembly is fitted on the second stud with the housing of the second locking system oriented in a diagonal direction with respect to third and fourth contiguous walls of the second recess.

The housing of both the first and second connection assemblies extends radially outwardly, across the surface of respective battery recess, for a length that is sized to limit a rotational movement of the housing within the battery recess.

Preferably, the second connection assembly comprises the same elements as the first connection assembly.

The present invention will now be described in more detail hereinafter with reference to the accompanying drawings, in which some, but not all embodiments of the invention are shown. In general, the same reference numeral will be used for possible variant embodiments of similar elements. Drawings illustrating the embodiments are not-to-scale schematic representations.

For the purpose of the present description and of the appended claims, except where otherwise indicated, all numbers expressing amounts, quantities, percentages, and so forth, are to be understood as being modified in all instances by the term "about". Also, all ranges include the maximum and minimum points disclosed and include any intermediate ranges therein, which may or may not be specifically enumerated herein.
FIG. 1 is a perspective view of a starter battery of known type and equipped with a screw-on clamp fitted on an external terminal.
FIG. 2 is an exploded perspective view of the screw-on clamp of Fig. 1.
FIG. 3 is a perspective view of a locking system according to an embodiment of the present invention, in a mounted condition.
FIG. 4 is a perspective view of the locking system of Fig. 3 in which parts of the locking system are shown in an unassembled condition.
FIG. 5 is a perspective view of a connection assembly according to an embodiment of the present invention, the connection assembly comprising the locking system of Figs. 3 and 4.
FIG. 6 is a cross-sectional view of the connection assembly of Fig. 6 taken along section line A-A indicated in FIG. 3.
FIG. 7 is a perspective view of the starter battery of Fig. 1 equipped with a respective connection assembly comprising the locking system in accordance with an embodiment of the present invention.
FIG. 8 is an enlarged view of a portion of FIG. 7.
FIG. 9 is a perspective top view of the portion shown in FIG. 8.

Within the present description and claims by "axial direction" or "axially" it is meant a vertical direction substantially parallel to an axis taken along the main extension of the locking system or of the connection assembly comprising the locking system when in an operative condition. The terms "upper" and lower" or "upwards" and "downwards" or "upwardly" and "downwardly" are defined with respect to the axial direction.

By "radially" or "radial direction" it is meant a direction substantially perpendicular to the axial direction. The terms "inner" and "outer" or "radially inner" and "radially outer", with reference to the elements of the locking system or of the screw-on clamp, are intended to refer to the relative radial position thereof.

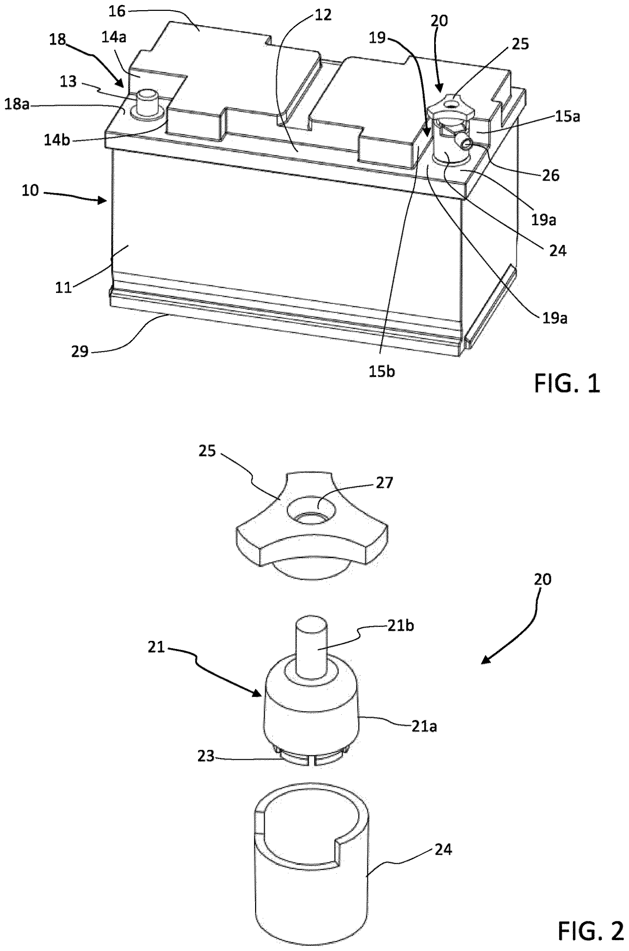

Figure 1 is a perspective view of a battery 10, in particular a starter battery customarily employed for powering an electrical starter motor of an internal combustion engine of a vehicle. According to some embodiments, the starter battery 10 may power an electrical starter motor of a dedicated diesel generator powering a transport conditioning unit. A dedicated engine allows operation of the transport conditioning unit when the vehicle main engine is off.

The starter battery 10 comprises a case 11 enclosing the inner battery components (not visible). The starter battery 10 employs terminals of opposite poles that are positioned externally on the battery case 11 to allow one or more electrical connections to the starter motor and/or to an electrical/electronic equipment, typically by means of electric cables (not shown in the figure).

The battery 10 comprises a first external pole terminal and a second external pole terminal of opposite poles (negative and positive). The first and second terminals. In Fig. 1 only the first external terminal 13 is visible, whereas the second external terminal is hidden within a screw-on clamp 20, which is described in the following. Each external terminal 13 is positioned on a surface of the battery case 11. Each external terminal 13 comprises a respective stud upstanding from surface 18a, 19a of the battery case 11. In the non-limiting example of the figure, each stud is a solid cylindrical metallic element.

In the embodiment of Figure 1, the battery case 11 comprises a top surface 16 and an opposite bottom surface 29. The case 11 comprises a first recess 18 and a second recess 19 formed in the top surface 16. The first and the second battery recesses 18, 19 face upward.

At the first recess 18, the top surface 16 is connected with a first lower surface 18a by first and second contiguous walls 14a, 14b vertically arranged with respect to the top surface 16. Preferably, the first and second contiguous walls 14a, 14b are perpendicular to one another.

The first and second contiguous walls 14a, 14b connect the top surface 16 and the first lower surface 18a.

The top surface 16 is connected with a second lower surface 19a by a third and a fourth contiguous walls 15a, 15b vertically arranged with respect to the top surface 16 to form the second recess 19. The third and fourth contiguous walls 15a, 15b, which may be perpendicular to one another, connect the top surface 16 to the second lower surface 19a.

A first stud 13 is positioned in the first battery recess 18, on the first lower surface18a. A second stud (not visible in the figure) in the second battery recess 19, on the second lower surface19a.

A screw-on clamp 20, also indicated in the following also to as the clamp, is fitted on the second stud. In use, each external terminal is connected with a respective screw-on clamp. The clamp 20 is a so-called French-type clamp illustrated in Fig. 2 in more detail to show its main parts.

The clamp 20 is an assembly comprising an electrical conductive connector 21 configured to fit on stud 13 of the battery terminal for electrical contact with the same. The clamp 20 further comprises a clamp enclosure 24 made of insulating material such as PVC. Typically, the electrical conductive connector 21 comprises a lower portion 21a having a generally cylindrical shape or a cup shape, the lower portion 21a forming a cavity facing downward when in an operative position, and an upper portion 21b in the form of an upstanding post positioned at the top of the lower portion 21a. The opening of the cavity of the lower portion 21a of the electrically conductive connector 21 is configured to fit on the stud 13 in known ways, for example by means of metal projections 23 at the end of the cavity engaging the terminal stud 13 for electrical contact. The electrically conductive connector 21 is typically a metallic element.

The clamp enclosure 24 has a generally cylindrical shape and a through-open cavity with two opposite open ends, the enclosure being configured to house at least the lower portion 21a of the metallic connection part. In particular, the clamp enclosure 24 surrounds the metallic lower portion 21a. The first clamp 20 further comprises a tightening element 25, in particular a tightening knob, configured to engage with the upstanding post 21b. The tightening knob 25 has a central hole 27 configured to fit on the upstanding post 21b. Typically, both the upstanding post 21b of the connector 21 and the inner side of the central hole 27 are threaded for engagement between the two parts (threads not visible in the figures). In particular the knob 25 is screwed onto the threaded upstanding post 21b.

Connection between the connector 21 and the stud 13 of the terminal pole for electrical contact may be differently shaped from those illustrated in the figures, as long as it guarantees an electrical connection.

In operation and typically, the cylindrically-shaped clamp enclosure 24 of the clamp 20 is placed on the stud 13 to surround the same. Next, the electrically conductive connector 21 is inserted in the clamp enclosure 24 and engaged on the stud 13 so that the metallic upstanding post 21b sticks out from the clamp enclosure 24. One or more electrically conductive cables (not shown) can be connected to the upstanding post 21b for connection of the terminal pole to an electrical equipment. For example and as known in the art, the one or more cables are equipped at one end with a metallic connecting lug 26, such as a ring-shaped lug, for insertion into the upstanding post 21b. Once the lug or lugs are connected to the upstanding post 21b, the tightening knob 25 is screwed on the upstanding post 21b so that the cable lugs are secured in place.

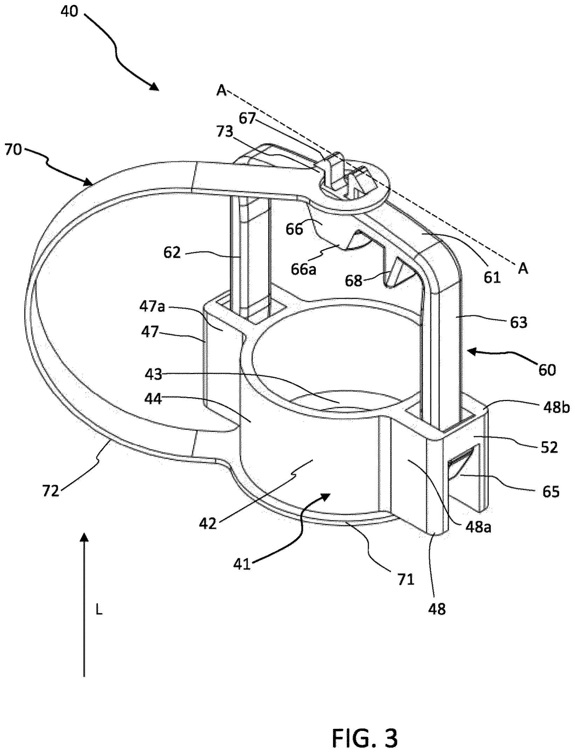

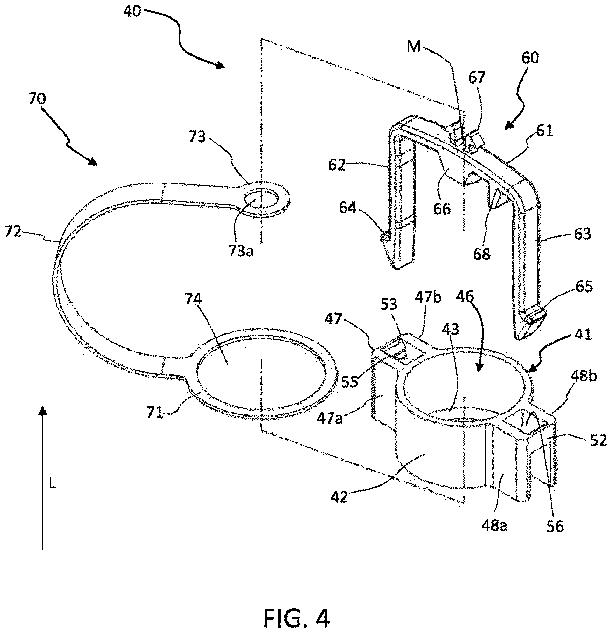

Road transport-induced vibrations of the battery 10 may cause the rotation of the tightening knob 25 about the upstanding post 21b, which may eventually lead to the disconnection of the lugs 26 from the terminal pole. Figure 3 is a perspective view of a locking system according to an embodiment of the present invention for a screw-on clamp. In Fig. 4 the locking system of Fig. 3 is shown in an unassembled condition. The locking system 40 is configured to fit on a screw-on clamp 20 of the type described in the foregoing (Fig. 2).

The locking system 40 comprises a housing 41. The housing 41 comprises a hollow main body 42 extending in an axial direction L. It is assumed that, when the locking system is in an operative condition, the axial direction L is a vertical direction. The main body 42 has a through opening 46 (Fig. 4) extending in the axial direction L. The main body 42 comprises a base 43 and a side wall 44 extending upwards from the base 43. In the embodiments shown in the figures, the main body 42 has a generally cylindrical shape and comprises a cylindrical side wall 44.

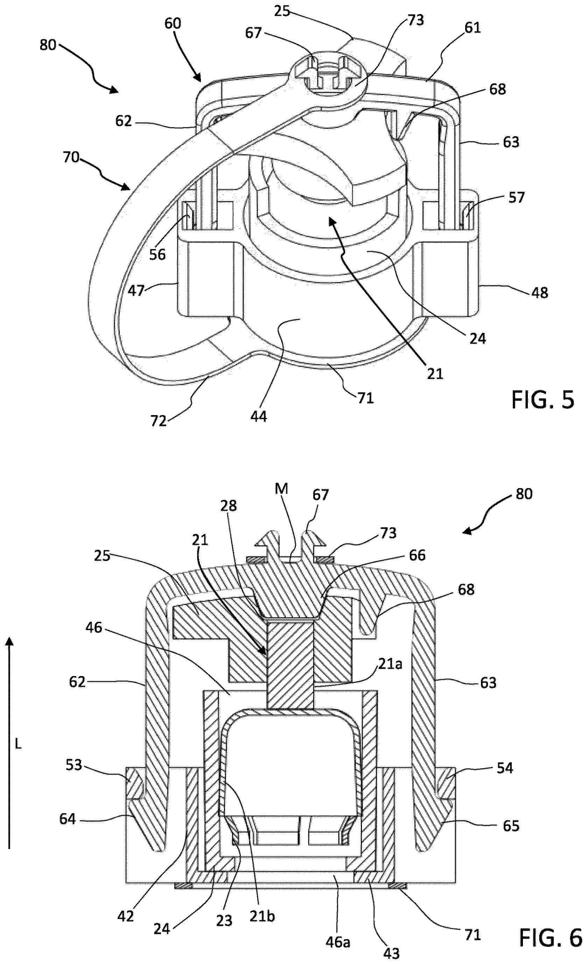

The base 43 of the housing 41 has a bottom opening 46a (indicated in Fig. 6) and an opposite top opening (not indicated), which are part of the through opening 46. The bottom opening 46a of the housing 41 and the top opening of the main body 42 are in axial alignment with one another.

The housing 41 further comprises a first recessed element 47 and a second recessed element 48 fixedly associated with the main body 42.

The first recessed element 47 and the second recessed element 48 are angularly spaced from one another with respect to the body side wall 44, in particular the recessed elements are not adjacent to one another.

In the embodiment shown in the figures, the first and the second recessed elements 47, 48 are arranged peripherally of the main body 42. In particular, the first and second recessed elements 47, 48 extend radially outwardly from the main body 42. In this way, the side wall 44 of the main body 42 is a common wall between main body 42 and each of the first and second recessed element 47, 48.

In the example of the figures, the first and second recessed element 47, 48 are positioned in alignment with each other in a radial direction so as to be opposite to one another (i.e. angular spacing of 180°) with respect to the main body 42.

The first recessed element 47 comprises a first recess 55 having an opening facing upwards, when the locking device 40 is in an operative position. The second recessed element 48 comprises a second recess 56 having an opening facing upwards, when the locking device 40 is in the operative position.

In the example shown in the figures, the first recess 55 and the second recess 56 extend from the side wall 44 of the main body 42, in a radial direction. In particular, the inner side wall of each recess 55, 56 of the respective recessed element 47, 48 shares a common wall with the side wall 44.

In an example, the first and second recessed elements 47, 48 is one-piece with the main body 42 of the housing 41.

The first recessed element 47 comprises a first retaining element 53 arranged in the first recess 55. The second recessed element 48 comprises a second retaining element 54 (visible in Fig. 6) arranged in the second recess 56.

In the non-limiting example of the figures, the first and second retaining elements 53, 54 are arranged at the opening facing upwards of the respective recess.

The first recessed element 47 comprises a first and a second side wall 47a, 47b extending radially outwardly from the side wall 44 of the main body 42. In an embodiment, the first and second walls 47a, 47b are parallel to one another. The first and second side walls 47a, 47b are joined to one another by a first connecting wall 51.

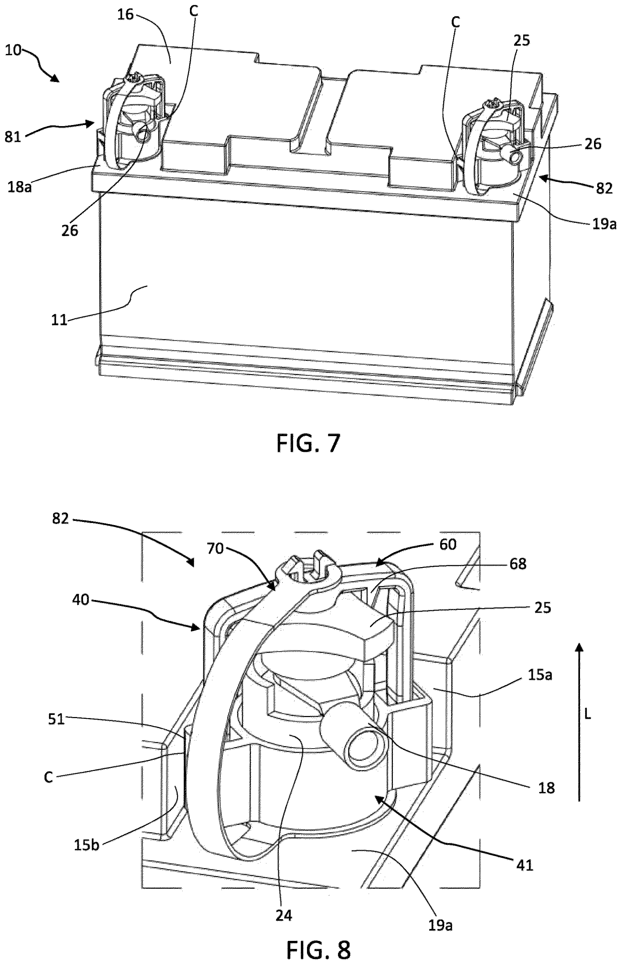

In particular, the first and second side walls 47a, 47b extend in the axial direction L and the first connecting wall 51 (partly visible only in Fig. 8) is transversal to the first and second side walls 47a, 47b.

The second recessed element 48 has a third and a fourth side wall 48a, 48b extending radially outwardly from the side wall 44 of the main body 42, in an opposite direction with respect to the first recessed element 47. In an embodiment, the third and fourth walls 48a, 48b are parallel to one another and joined to one another by a second connecting wall 52.

In particular, the third and the fourth side walls 48a, 48b extend in axial direction L and the second connecting element 52 is transversal to the third and the fourth side walls 48a, 48b.

In the non-limiting example shown in the figures, the first and second side walls 47a, 47b are vertical walls extending upwardly from the base 43 to the top of the main body 42. The third and the fourth side walls 48a, 48b are vertical walls extending upwardly from the base 43 to the top of the main body 42. The first connecting wall 51 extends substantially perpendicularly to the first wall 47a and to the second wall 47b. The second connecting wall 52 extends substantially perpendicularly to the third and fourth wall 48a, 48b.

Each of first recess 55 and second recess 56 is a through opening.

In other embodiments not shown in the figures, each of the first and the second recess 55, 56 may be closed at its bottom by a base wall connected to the vertical side walls of the recessed elements. In still other embodiments not shown in the figures, the connecting walls 51, 52 may have approximately the same longitudinal extension of the vertical walls 47a-47b and 48a-48b of the recessed elements 47, 48.

The locking system 40 comprises a clip 60 configured to be coupled to the housing 41. The clip 60 comprises a first leg 62 and a second leg 63, the first and the second leg being configured to be inserted into the respective first and second recess 55, 56 of housing 41.

The clip 60 comprises a transverse bridge 61. The clip 60 has an inverted U-shape when the locking system 40 is in an operative position. The first and second legs 62, 63 extend downwardly on either side of the transverse bridge 61.

Preferably, the legs 62, 63 of the clip 60 are flexible to permit them to be inserted in the respective recess 55, 56 and to be brought into engagement with the respective retaining element 53, 54.

Preferably, both the housing 41 and the clip 60 are made of an electrically insulating material, such as of electrically insulating polymeric material, for example PVC or reinforced polymers.

Each of the first and second leg 62, 63 comprises a respective first and second engagement pin 64, 65.

In the figures, the first and the second connecting walls 51, 52 are arranged at the top of the respective sidewalls 47a, 47b and 48a, 48b of the recessed elements 47, 48. However, each connecting wall 51, 52 may be positioned at a different height of the sidewalls of the recessed element provided that engagement with each of the legs 62, 63 of clip 60 is feasible.

In the embodiment shown in the figures, the first and the second retaining elements 53, 54 are located at the first and the second connecting walls 51, 52, respectively. Each of the first and second retaining elements 53, 54 protrudes from the first and second connecting wall 51, 52 inwardly into the respective recess 55, 56. The first and second engagement pin 64, 65 protrude radially outwardly from the respective leg 62, 63 of the clip 60 to engage with the first and second retaining element 53, 54.

The fastening between the retaining elements 53, 54 and the respective engagement pins 64, 65 locks the clip 60 to the housing 41.

Preferably, each of the first and second retaining elements 53, 54 has a curved or slanted transition surface, which is configured to engage the respective first and second engagement pin 64, 65. The first engagement pin 64 is shaped and dimensioned to fit into the recess 55 and the second engagement pin 65 is shaped and dimensioned to fit into the second recess 56.

The clip 60 and in particular the transverse bridge 61 comprises a tongue 66 protruding downwardly from the same. In the example of the figures, the tongue 66 is arranged at a middle position M (indicated in Fig. 4) of transverse bridge 61.

The tongue 66 has a truncated-conical shape oriented downward. The tongue has a lower truncated face 66a (Fig. 3) facing downward into the main body 42 of the housing 41. The lower truncated face 66a may be substantially flat.

In embodiments, the clip 60 and in particular the transverse bridge 61 comprises a tooth 68 of generally conical shape protruding downwardly from the transverse bridge 61. The tooth 68 and the tongue 66 are radially spaced from each other, respective to the extension of the transverse bridge 61. In particular, the tooth 68 is in a radially outward position respective to the tongue 66.

In example of the figures, the tooth 68 is positioned peripherally relative to the middle position M.

The function of tongue 66 and tooth 68 will be clearer when discussing a connection assembly comprising the locking system 40.

Preferably, the locking system 40 further comprises a fastening member 70. The fastening member 70 comprises a hollow member base 71 having a through opening 74, a fastening strip 73 and a lace 72 connecting the member base 71 to the fastening strip 73. The fastening strip 73 has a strip through hole 73a.

The transverse bridge 61 of the clip 60 further comprises a protruding element 67 extending upward from the transverse bridge. In the non-limiting example of the figures, the protruding element 67 comprises a pair of hooked-shaped protruding projections extending upwards, the hooks of the projections facing in radially opposite directions.

In a preferred embodiment, the protruding element 67 is a flexible element. Preferably the protruding element 67 is located at the middle position M of the transverse bridge 61, at the opposite side of the tongue 66.

The fastening strip 73 is configured to be inserted through the protruding element 67 so as to engage with the same.

Preferably, the clip 60 is built as one piece.

When in the operative position, the housing 41 is positioned on top of the member base 71 and the member base 71 is in axial alignment with the housing 41, in particular with the main body 42 and the fastening strip 73 is engaged to the protruding element 67.

In the embodiment of the figures, the through hole 74 of the hollow member base 71 is dimensioned to allow free passage in the through opening 46 of the main body 42 of the housing 41.

Figures 5 and 6 illustrate a connection assembly 80 comprising the locking system 40 described in the foregoing. The connection assembly 80 further comprises a screw-on clamp 20, of the type described with reference to Figs. 1 and 2.

The main body 42 of the housing 41 is dimensioned to accommodate the clamp enclosure 24 of the screw-on clamp 20. The clamp enclosure 24, which has a through-open cavity, is inserted in the main body 42. The electrically conducting connection part 21 is positioned within in the cylindrical clamp enclosure 24 and is configured to be fitted on a stud (not shown) of an external pole terminal of a battery, in particular the lower portion 21a engages with the stud for electrical connection. The tightening knob 25 is engaged to the upstanding post 21b of the electrically conductive connection part 21.

The through hole of the main body 42 and the through hole of the enclosure 24 of clamp 20 are aligned with one another.

The clip 60 of the locking system 40 is placed on top of the tightening knob 25. The legs 62, 63 of the clip 60 are positioned radially outwardly of the tightening knob 25.

The tooth 68 protruding downwardly from the transverse bridge 61 of the clip 60 is configured to engage the knob 25 to prevent a rotation of the clamp 20 about the pole terminal and thus a possible unscrewing of the electrically conductive connector 21 which may lead to a disconnection of the clamp 20 from the terminal.

In particular, tooth 68 is positioned in the transverse bridge 61 peripherally (i.e. radially outwardly from) with respect to the middle position M of the transverse bridge 61 to engage an outer surface portion of knob 25. In the non-limiting example of the figures, the tightening knob 25 is star-shaped and the outer surface portion in contact with the tooth 68 is a surface between adjacent lobes of the star.

In some examples, the peripheral position of the tooth 68 on the transverse bridge 61 may be selected depending on the radial length or diameter of the knob 25.

In the embodiment shown in Fig. 6, the central through hole 27 of the tightening knob 25 has an upper portion 28 that has a truncated-conical shape oriented upward. The tongue 66 of clip 60 of truncated-conical shape oriented downward is configured to fit into the upper portion 28 of the through hole 27 of the tightening knob 25. The tongue 66 and the upper portion 28 of the central through hole 27 are in vertical alignment and engaged to one another.

In embodiments in which the locking system 40 comprises the fastening member 70, the fastening member 70 is placed to surround the pole terminal. In particular, the member base 71 is placed to surround the pole terminal, e.g. the metallic stud. The housing 41 is then positioned on the member base 71 so as the main body 42 is in axial alignment with the member base 71.

When the clip 60 is fastened to the housing 41, the lace 72 is connected to the protruding element 67 by engaging the fastening strip 73 onto the protruding element 67. The provision of the fastening member 70 may prevent the clip 60 from being detached from the housing 41 during service operations when the truck is still.

Figure 7 illustrates the starter battery 10 of Fig. 1 further comprising a first and a second connection assembly 81, 82 of the type previously described with reference to connection assembly 80. Each connection assembly 81, 82 is fitted on a respective first and second stud of the pole terminals (not visible). Each connection assembly 81, 82 comprises a screw-on clamp 20 housed in the locking system 81 and 82 and fitted to the respective pole terminal.

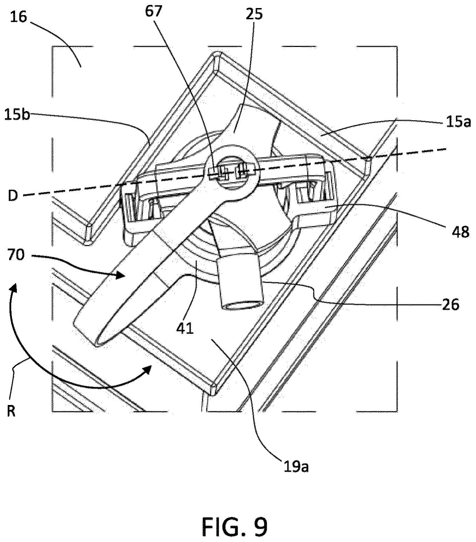

Figures 8 and 9 show in more detail the second connection assembly 82 placed in the second battery recess 19. The housing 41 of the locking system 40 is oriented in a diagonal direction D with respect to the third and fourth contiguous walls 15a, 15b of the second battery recess 19a. The housing 41 of the second connection assembly 82 extends across the surface of the second battery recess 19a, for a length that is sized to limit a rotational movement within the second recess.

The length of the housing is extends in a direction perpendicular to the axial direction L. As said, the length is sized to allow the housing to have a limited rotation angle range, for example 10-15°. This is exemplified in Fig. 8 that shows the first recessed element 51 of the housing 41 which contacts connecting wall 15b at position C. Figure 9 is a top view of the second battery recess 19 indicating the rotating direction R limited from a contact point C where the first recessed element 47 contacts the third vertical wall 15b to a second contact point (not indicated in the figures) at which the second recessed element contacts the fourth vertical wall 15a. Analogously, the first connection assembly 81 fitted on the first stud comprises a housing 41 oriented in a diagonal direction with respect to the first and second contiguous walls 14a, 14b of first battery recess 18. The housing 41 of the second connection assembly 82 extends across the surface 19a of the second battery recess 19, for a length that is sized to limit a rotational movement within the first recess Assuming that the area of the first recess 18 is the same as the area of the second recess 19, the second length correspond to the first length of housing 41 of connection assembly 82.

In Fig. 7, the contact position C of the first connection assembly 81 is indicated.

Although the invention has been described with respect to a limited number of embodiments, it will be appreciated that many variations and modifications may be made, and are intended to be within the scope of the appended claims.

## Claims

1. A locking system (40) for a screw-on clamp configured to be fitted on a stud (14, 14b) of an external pole terminal of a battery (10), the locking system (40) comprising:
a housing (41) configured to house a screw-on clamp (20) comprising
- a hollow main body (42) comprising a body side wall (44) defining a through opening (46) and extending in an axial direction,
- a first recessed element (47) and a second recessed element (48) fixedly associated with the body side wall (44),
- the first recessed element (47) comprising a first recess (56) having a first opening facing upwards with respect to the axial direction and a first retaining element (53) located in the first recess (56), and
- the second recessed element (48) comprising a second recess (57) having a second opening facing upwards with respect to the axial direction and a second retaining element (54) located in the second recess (54),
the locking system further comprising a clip (60) configured to be coupled to the housing (41) and comprising a first leg (62) and a second leg (63),
the first and second legs (62, 63) being configured to be inserted in the respective first and second recess (56, 57) and to be releasably fastened to the first and second retaining elements (53, 54).

2. The locking system (40) of claim 1, wherein the first recessed element (47) and the second recessed element (48) are angularly spaced from one another with respect to the body side wall (44).

3. The locking system (40) of claim 1 or 2, wherein the clip (60) has a general inverted U-shape when the locking system is in an operative position and comprises a transverse bridge (61), the first and second leg (61, 62) extending downwardly on either side of the transverse bridge (61).

4. The locking system (40) of any one of claims 1 to 3, wherein each of the first and second leg (62, 63) of the clip (60) comprises a first and a second engagement pin (64, 65) protruding from said respective leg (61, 62), each engagement pin (64, 65) being configured to engage the respective first and second retaining element (53, 54).

5. The locking system (40) of claim 4, wherein each of the first and second retaining elements (53, 54) has a curved or slanted transition surface for engagement with the relevant engagement pin (64, 65) of the first and second leg (62, 63).

6. The locking system of any one of the preceding claims, wherein the first recessed element (47) and the second recessed element (48) extend radially outwardly from the body sidewall (44).

7. The locking system (40) of any one of the preceding claims, wherein the first recessed element (47) comprises first and second vertical walls (47a, 47b) extending radially outwardly from the body side wall (44) of the main body (42) and a first connecting wall (51) transversally connecting the first and second vertical walls (47a, 47b) to one another, wherein the first retaining element (53) is located on the first connecting wall (51) and protrudes inwardly into the first recess (56), and
the second recessed element (48) comprises a third and a fourth vertical walls (48a, 48b) extending radially outwardly from the side wall (44) of the main body (42) and a second connecting wall (52) transversally connecting the third and the fourth vertical walls (48a, 48b) to one another, wherein the second retaining element (54) is located on the second connecting wall (52) and protrudes inwardly into the second recess (57).

8. The locking system (40) of any one of the preceding claims, wherein the main body (42) comprises a base (43) having a bottom opening (45) part of the through opening (46) of the main body (42), the body side wall (44) of the main body extending upwardly from the base (43).

9. The locking system (40) of claims 3 or any one of claims 4 to 8, when dependent on claim 3, wherein the clip (60) comprises a tongue (66) protruding downwardly from the transverse bridge (61).

10. The locking system (40) of claim 9, wherein the tongue (66) is arranged at a middle position of the transverse bridge (61).

11. The locking system (40) of claim 3 or any one of claims 4 to 9, when dependent on claim 3, wherein the clip (60) comprises a tooth (68) protruding downwardly from the transverse bridge (68), the tooth (68) being positioned peripherally relative to a middle position of the transverse bridge (61).

12. The locking system (40) of claim 3 or of any one of claims 4 to 11, when dependent on claim 3, wherein the clip (60) comprises an upstanding protruding element (67) extending upwardly from the transverse bridge (61), and the locking system (40) further comprises, when in an operative position,
a fastening member (70) comprising a hollow member base (71) having a through opening (74), the housing (41) being positioned on top of the member base (71), the member base (71) being in axial alignment with the main body (44) of the housing (41),
the fastening member (70) further comprising a fastening strip (73) and a lace (72) connecting the member base (71) to the fastening strip (73), the fastening strip (73) being configured to engage with the protruding element (67).

13. The locking system (40) of claim 12, when dependent on claim 10, wherein the protruding element (67) is arranged at a middle position (M) of the transverse bridge (61), at the opposite side of the tongue (66).

14. The locking system (40) of any one of the preceding claims, wherein the main body (42) of the housing (41) has a cylindrical shape.

15. A connection assembly (80) comprising the locking system (40) of any one of the preceding claims, the assembly comprising a screw-on clamp (20) comprising
- a hollow clamp enclosure (24) configured to surround a stud (13a, 13b) of an external pole terminal (13) of a battery (10),
- an electrically conductive connection part (21) configured to be fitted on the stud (13a, 13b), the connection part (21) comprising lower portion (21b) configured to engage with the stud (13a, 13b) to form an electrical connection and an upstanding post (21a) projecting upwards from lower portion (21b), and
- a tightening knob (25), the tightening knob having a central through hole (27) engaging the upstanding post (21a),
wherein:
the clamp enclosure (24) of the screw-on clamp (20) is housed in the main body (42) of the housing (41) of the locking system (40), the electrically conducting connection part (21) is housed in the clamp enclosure (24) and
is configured to fit on the stud (13a, 13b), and the tightening knob (25) is engaged to the upstanding post (21b) of the electrically conductive connection part (21), and
the clip (60) of the locking system (40) is placed on top of the tightening knob (25) with the legs (62, 63) of the clip being positioned radially outwardly of the tightening knob (25).

16. The connection assembly (80) of claim 15, when dependent on claim 11, when dependent on claim 9 or 10, wherein the central through hole (27) of the tightening knob (25) has an upwardly flared truncated conical shape portion and the tongue (66) has a downwardly flared truncated-conical shape, the tongue and the central through hole (27) being in vertical alignment and engaged to one another, and
the tooth (68) of the clip (60) is positioned peripherally relatively to the tongue (66) and is configured to engage a peripheral portion of tightening knob (25) to prevent the tightening knob (25) from rotating.

17. A starter battery (10) comprising a case (11) having a top surface (16) and a first lower surface (18a), the top surface (16) being connected with the first lower surface (18a) by a first and a second contiguous walls (14a, 14b) vertically arranged with respect to the top surface (16) to form a first recess (18), the first and second contiguous walls (14a, 14b) being perpendicular to one another,
a first connection assembly (80) according to claim 15 or 16, when dependent on claim 6 or any one of claims from 7 to 14, when dependent on claim 6, is fitted on the first stud (13) with the housing (41) of the locking system (40) oriented in a diagonal direction with respect to the first and second contiguous walls (14a, 14b), the housing (41) of the first assembly (80) extending across the surface (18a) of the first battery recess (18) for a length sized to limit a rotational movement of the housing within the first recess (18).

## Amended claims

### Amended claims in accordance with Rule 137(2) EPC.

1. A locking system (40) for a screw-on clamp configured to be fitted on a stud (14, 14b) of an external pole terminal of a battery (10), the locking system (40) comprising:
a housing (41) configured to house a screw-on clamp (20) comprising
- a hollow main body (42) comprising a body side wall (44) defining a through opening (46) and extending in an axial direction,
- a first recessed element (47) and a second recessed element (48) fixedly associated with the body side wall (44), **characterised in that**
- the first recessed element (47) comprising a first recess (56) having a first opening facing upwards with respect to the axial direction and a first retaining element (53) located in the first recess (56), and
- the second recessed element (48) comprising a second recess (57) having a second opening facing upwards with respect to the axial direction and a second retaining element (54) located in the second recess (54),
the locking system further comprising a clip (60) configured to be coupled to the housing (41) and comprising a first leg (62) and a second leg (63),
the first and second legs (62, 63) being configured to be inserted in the respective first and second recess (56, 57) and to be releasably fastened to the first and second retaining elements (53, 54), wherein
the first recessed element (47) and the second recessed element (48) extend radially outwardly from the body sidewall (44).

2. The locking system (40) of claim 1, wherein the first recessed element (47) and the second recessed element (48) are angularly spaced from one another with respect to the body side wall (44).

3. The locking system (40) of claim 1 or 2, wherein the clip (60) has a general inverted U-shape when the locking system is in an operative position and comprises a transverse bridge (61), the first and second leg (61, 62) extending downwardly on either side of the transverse bridge (61).

4. The locking system (40) of any one of claims 1 to 3, wherein each of the first and second leg (62, 63) of the clip (60) comprises a first and a second engagement pin (64, 65) protruding from said respective leg (61, 62), each engagement pin (64, 65) being configured to engage the respective first and second retaining element (53, 54).

5. The locking system (40) of claim 4, wherein each of the first and second retaining elements (53, 54) has a curved or slanted transition surface for engagement with the relevant engagement pin (64, 65) of the first and second leg (62, 63).

6. The locking system (40) of any one of the preceding claims, wherein the first recessed element (47) comprises first and second vertical walls (47a, 47b) extending radially outwardly from the body side wall (44) of the main body (42) and a first connecting wall (51) transversally connecting the first and second vertical walls (47a, 47b) to one another, wherein the first retaining element (53) is located on the first connecting wall (51) and protrudes inwardly into the first recess (56), and
the second recessed element (48) comprises a third and a fourth vertical walls (48a, 48b) extending radially outwardly from the side wall (44) of the main body (42) and a second connecting wall (52) transversally connecting the third and the fourth vertical walls (48a, 48b) to one another, wherein the second retaining element (54) is located on the second connecting wall (52) and protrudes inwardly into the second recess (57).

7. The locking system (40) of any one of the preceding claims, wherein the main body (42) comprises a base (43) having a bottom opening (45) part of the through opening (46) of the main body (42), the body side wall (44) of the main body extending upwardly from the base (43).

8. The locking system (40) of claims 3 or any one of claims 4 to 7, when dependent on claim 3, wherein the clip (60) comprises a tongue (66) protruding downwardly from the transverse bridge (61).

9. The locking system (40) of claim 8, wherein the tongue (66) is arranged at a middle position of the transverse bridge (61).

10. The locking system (40) of claim 3 or any one of claims 4 to 9, when dependent on claim 3, wherein the clip (60) comprises a tooth (68) protruding downwardly from the transverse bridge (68), the tooth (68) being positioned peripherally relative to a middle position of the transverse bridge (61).

11. The locking system (40) of claim 3 or of any one of claims 4 to 10, when dependent on claim 3, wherein the clip (60) comprises an upstanding protruding element (67) extending upwardly from the transverse bridge (61), and the locking system (40) further comprises, when in an operative position,
a fastening member (70) comprising a hollow member base (71) having a through opening (74), the housing (41) being positioned on top of the member base (71), the member base (71) being in axial alignment with the main body (44) of the housing (41),
the fastening member (70) further comprising a fastening strip (73) and a lace (72) connecting the member base (71) to the fastening strip (73), the fastening strip (73) being configured to engage with the protruding element (67).

12. The locking system (40) of claim 11, when dependent on claim 9, wherein the protruding element (67) is arranged at a middle position (M) of the transverse bridge (61), at the opposite side of the tongue (66).

13. The locking system (40) of any one of the preceding claims, wherein the main body (42) of the housing (41) has a cylindrical shape.

14. A connection assembly (80) comprising the locking system (40) of any one of the preceding claims, the connection assembly comprising a screw-on clamp (20) comprising
- a hollow clamp enclosure (24) configured to surround a stud (13a, 13b) of an external pole terminal (13) of a battery (10),
- an electrically conductive connection part (21) configured to be fitted on the stud (13a, 13b), the connection part (21) comprising lower portion (21b) configured to engage with the stud (13a, 13b) to form an electrical connection and an upstanding post (21a) projecting upwards from lower portion (21b), and
- a tightening knob (25), the tightening knob having a central through hole (27) engaging the upstanding post (21a),
wherein:
the clamp enclosure (24) of the screw-on clamp (20) is housed in the main body (42) of the housing (41) of the locking system (40), the electrically conducting connection part (21) is housed in the clamp enclosure (24) and
is configured to fit on the stud (13a, 13b), and the tightening knob (25) is engaged to the upstanding post (21b) of the electrically conductive connection part (21), and
the clip (60) of the locking system (40) is placed on top of the tightening knob (25) with the legs (62, 63) of the clip being positioned radially outwardly of the tightening knob (25).

15. The connection assembly (80) of claim 14, when dependent on claim 10, when dependent on claim 8 or 9, wherein the central through hole (27) of the tightening knob (25) has an upwardly flared truncated conical shape portion and the tongue (66) has a downwardly flared truncated-conical shape, the tongue and the central through hole (27) being in vertical alignment and engaged to one another, and
the tooth (68) of the clip (60) is positioned peripherally relatively to the tongue (66) and is configured to engage a peripheral portion of tightening knob (25) to prevent the tightening knob (25) from rotating.

16. A starter battery (10) comprising a case (11) having a top surface (16) and a first lower surface (18a), the top surface (16) being connected with the first lower surface (18a) by a first and a second contiguous walls (14a, 14b) vertically arranged with respect to the top surface (16) to form a first recess (18), the first and second contiguous walls (14a, 14b) being perpendicular to one another,
a first connection assembly (80) according to claim 14 or 15,, is fitted on the first stud (13) with the housing (41) of the locking system (40) oriented in a diagonal direction with respect to the first and second contiguous walls (14a, 14b), the housing (41) of the first assembly (80) extending across the surface (18a) of the first battery recess (18) for a length sized to limit a rotational movement of the housing within the first recess (18).
